# EUROPÄISCHE PATENTANMELDUNG

(11) **EP 2 896 661 A1**
(43) Veröffentlichungstag der Anmeldung: **22.07.2015**
(21) Anmeldenummer: 14151697.1
(22) Anmeldetag: 19.01.2014
(51) Int. Cl.: C09D 5/03, B05D 1/12, B05D 1/26, C09D 5/29, C09D 5/32, C09D 7/14, C08K 9/10, C09C 1/62, C09C 1/64, C09C 1/00

(54) **Pulverlack in partikulärer und ausgehärteter Form mit Effektpigmenten sowie Verfahren zur Herstellung von Pulverlack mit Effektpigmenten**

(71) Anmelder: IGP Pulvertechnik AG, 9500 Wil (CH)
(72) Erfinder: Mattern, René, 8274 Tägerwilen (CH); Büeler, Roman, 9247 Henau (CH); D'Anna, Leo, 8500 Frauenfeld (CH)
(74) Vertreter: Hepp Wenger Ryffel AG

(57) **Zusammenfassung**

Verfahren zur Herstellung von Pulverlack mit Effektpigmenten, wobei mittels eines Extruders (10) eine homogene thermoplastische Lackmasse aus den Ausgangsstoffen, insbesondere umfassend Bindemittel, Additive, Farbmittel und/oder Füllstoffe, hergestellt wird und die Lackmasse nach dem Verlassen des Extruders (10) vermahlen wird, wobei die Effektpigmente (1) in einem Endbereich des Extruders (10) zugegeben und in der viskosen Lackmasse dispergiert werden.

## Beschreibung

Die vorliegende Erfindung betrifft einen Pulverlack in partikulärer und ausgehärteter Form mit Effektpigmenten sowie Verfahren zur Herstellung von Pulverlack mit Effektpigmenten.

Aus dem Stand der Technik sind verschiedene mit Effektpigmenten versehene Pulverlacke sowie verschiedene Verfahren zu deren Herstellung bekannt. Effektpigmente werden in Pulverlacken zum Erzielen verschiedener optischer Effekte eingesetzt. Dabei stellt sich jeweils die Schwierigkeit, die Effektpigmente gleichmässig im Pulverlack zu verteilen, so dass nach der Pulverlackapplikation die ausgehärtete Pulverlackschicht auf dem Substrat ein gleichmässiges Erscheinungsbild und Funktion gewährleistet. Verschiedene Verfahren zur Veredelung von Pulverlacken mit Effektpigmenten sowie die entsprechenden mit Effektpigmenten versehenen Pulverlacke sind bekannt. Das einfachste Verfahren ist das so genannte "dry-blend"-Verfahren, wo eine entsprechende Menge an Effektpigmenten dem fertigen Basispulverlack zugefügt wird und in einem Mischvorgang eine homogene Verteilung der Effektpigmente in Basispulverlack erreicht wird. Nachteilig bei diesem Verfahren ist die mangelnde Entmischungsstabilität, welche sich insbesondere bei der Verarbeitung von grösseren Mengen beispielsweise in automatisierten Pulverlackieranlagen bemerkbar macht. Insbesondere bei einer grösseren beschichteten Fläche kann ein wolkenähnliches Erscheinungsbild entstehen, ausgelöst durch unterschiedliches Auflade- und Abscheideverhalten zwischen den Pulverpartikeln und den trocken zugemischten Effektpigmenten. Weitere Gründe liegen in der unterschiedlichen Dichte zwischen den Pulverlackpartikeln und den Effektpigmenten sowie der unterschiedlichen Partikelgrösse und Partikelform. Diese mangelnde Mischungsstabilität macht die entsprechenden Pulverlacke nur bedingt geeignet für die Anwendung in der Architektur beispielsweise zum Beschichten von komplexen geometrischen, effektvollen Fassadenelementen.

Ein weiteres bekanntes Verfahren ist das so genannte "bonding", wo wiederum die Effektpigmente in einem Batchprozess dem Basispulverlack zugefügt werden. Im Unterschied zum "dry-blend"-Verfahren wird das Mischen jedoch in einem thermomechanischen Prozess durchgeführt. Durch die in einem Rührprozess erzeugte Reibungswärme wird der Basispulverlack im Mischbehälter aufgeheizt. Dabei ist die Temperatur so zu wählen, dass die einzelnen Partikel des Basispulverlackes bereits weich und klebrig werden, so dass die zu diesem Zeitpunkt zugegebenen Effektpigmente angebunden werden können. Der so gewonnene Pulverlack ist im Vergleich zu einem mit oben genanntem "dry-blend"-Verfahren gewonnenen Pulverlack deutlich stabiler gegen Entmischung. Nachteilig sind jedoch der aufwändige und nur batchweise durchzuführende Prozess sowie die schwierige Prozesskontrolle. Hierdurch gelingt die Anbindung der Effektpigmente an das Basispulver nur unvollständig. Somit tritt bei der Pulverapplikation wiederum eine Separierung zwischen Basispulver und nicht angebundenen Effektmittel auf, so dass auch hier, wenn auch weniger ausgeprägt als mit im "dry-blend"-Verfahren hergestelltem Pulverlack, eine streifige oder wolkige Oberfläche nach dem Einbrennen resultieren kann.

Des Weiteren sind so genannte modifizierte/stabilisierte Effektpigmente auf dem Markt erhältlich, welche bereits von einer Bindemittelschicht umgeben sind. Diese Effektpigmente allein sind jedoch noch nicht filmbildend. Solche modifizierten Effektpigmente können gemäss Herstellerangaben bereits bei der Herstellung der Pulverlackmischung zugegeben werden und wie die üblichen Pulverlackzutaten in einem Extruder mittels klassischer Extrusion gleichmässig vermischt und verbunden werden. Nachteilig an diesem Verfahren ist insbesondere der Umstand, dass die Effektpigmente durch die Verarbeitung im Extruder extremen Scherkräften ausgesetzt sind, so dass diese beschädigt und zerteilt werden. Entsprechend müssen mehr Effektpigmente eingesetzt werden, um effektvolle und zufriedenstellende Effekte zu gewährleisten. Unter Umständen kann sogar das gewünschte Effektbild nicht mit den verfügbaren, stabilisierten Pigmenten erzielt werden.

Es ist Aufgabe der Erfindung, die Nachteile des Standes der Technik zu überwinden. Insbesondere soll einen Pulverlack in partikulärer Form zur Verfügung gestellt werden, welcher sich in der Applikation durch eine hohe Entmischungsstabilität auszeichnet. Ausserdem soll ein Pulverlack in ausgehärteter Form zur Verfügung gestellt werden, welcher eine exzellente Witterungsbeständigkeit aufweist.

Schliesslich soll ein Verfahren zur Verfügung gestellt werden, welches ein einfaches und kontrolliertes Herstellen von Pulverlacken mit Effektpigmenten mit einer hohen Gleichmässigkeit erlaubt.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Ein erfindungsgemässer Pulverlack in partikulärer Form mit Effektpigmenten zeichnet sich dadurch aus, dass die Effektpigmente im Wesentlichen mit einer filmbildenden Lackmatrix benetzt und umhüllt sind. Ein solcher Pulverlack ist zur Filmbildung befähigt. Dabei wird unter "im Wesentlichen mit der Lackmatrix benetzt und umhüllt" verstanden, dass die Oberfläche der Effektpigmente wenigstens zu 50%, insbesondere wenigstens zu 75%, bevorzugt wenigstens zu 90% von Lack belegt ist. Durch diese Umhüllung der Effektpigmente mit der Lackmatrix kann gewährleistet werden, dass die umhüllten Effektpigmente bei der elektrostatischen Applikation ein ähnliches Auflade- und Abscheideverhalten aufweisen und sich insofern nur sehr schwer bis gar nicht von den Pulverlackpartikeln entmischen können. Ebenso wird durch die Umhüllung der Effektpigmente mit der Lackmatrix im Lack gewährleistet, dass bei einer späteren Applikation und nachfolgendem Einbrennen des Pulverlackes auf der gesamten Fläche ein gleichmässiger Effekt erzielt werden kann. Die aus den Pulverlacken gemäss dem Stand der Technik bekannten Wolken- und Streifenbildung wurden so eliminiert. Unter einer Lackmatrix werden die zusammenvermischten Ausgangsstoffe des Pulverlackes ausgenommen der Effektpigmente verstanden.

Wenigstens 80%, insbesondere wenigstens 90%, bevorzugt wenigstens 95% aller Effektpigmente können mit der Lackmatrix überzogen sein. Dieser grosse Anteil an mit Lack überzogenen Effektpigmenten gewährleistet eine einfachere Handhabung des Pulverlackes.

Die Bestimmung ob und welcher Anteil der Effektpigmente mit Lack überzogen ist, erfolgt beispielsweise optisch an einer Probe des Pulverlacks. Dabei ist darauf zu achten, dass die Probe derart gross gewählt werden muss, dass eine statistische Aussage möglich ist.

Die Grösse der Effektpigmente kann einen Mittelwert zwischen 5 µm und 120 µm, insbesondere zwischen 10µm und 100 µm, bevorzugt zwischen 30 µm und 100 µm liegen. Durch eine relativ genaue Eingrenzung der Grösse der Effektpigmente kann gewährleistet werden, dass eine gleichbleibende Effektwirkung bei der Auftragung des Pulverlackes gewährleistet werden kann. Dabei kann die Bestimmung der Grösse der Effektpigmente beispielsweise an einer definierten Probe nach dem Auslösen des Lackes erfolgen. Die Grösse wird dann anhand des Äquivalent-Durchmessers bestimmt. Dieser Durchmesser kann beispielsweise mittels entsprechender Siebe oder durch mikroskopische Betrachtung und Messung bestimmt werden.

Die Grösse der Effektpigmente kann einer Normverteilung mit einem Mittelwert und einer Standardabweichung σ1 kleiner oder gleich 50%, insbesondere kleiner oder gleich 30%, bevorzugt kleiner oder gleich 10% des Mittelwerts entsprechen. Durch die Grössenverteilung der Effektpigmente mit einer nur geringen Standardabweichung kann sichergestellt werden, dass der gewünschte Effekteindruck auf einer beschichteten Fläche möglichst gleichmässig zum Ausdruck kommt. Die Bestimmung der Grössenverteilung der Effektpigmente erfolgt wiederum an einer definierten Probe nach Auslösen des Lackes.

Weniger als 40%, insbesondere weniger als 20%, bevorzugt weniger als 10% der Effektpigmente können eine Bruchkante aufweisen. Dadurch, dass nur ein sehr geringer Anteil der Effektpigmente eine Bruchkante aufweist, kann gewährleistet werden, dass die Effektpigmente nicht oder nur wenig beschädigt sind und noch immer ihre ursprüngliche Form aufweisen. Dabei ist jedoch zu berücksichtigen, dass bei einem üblichen Herstellungsprozess von Pulverlack ein Schritt des Vermahlens benötigt wird, um schlussendlich das zu verarbeitende Pulverlack-Pulver herzustellen. Bei einem solchen Mahlprozess kann es durchaus vorkommen, dass das eine oder andere Effektpigment beschädigt wird. Dadurch, dass jedoch nur ein sehr geringer Anteil von beschädigten Effektpigmenten vorhanden ist, kann wiederum eine gleichmässige Effekterscheinung gewährleistet werden. Ausserdem wird dadurch gewährleistet, dass der Pulverlack eine ausgezeichnete Witterungs- und Umweltbeständigkeit, insbesondere Lauge- oder Säurebeständigkeit, aufweist. Die Bestimmung der Anteile an Effektpigmenten mit Bruchkante erfolgt vorzugsweise wiederum an einer definierten Probe nach Auslösen des Lackes. Das Erkennen einer Bruchkante wird vorzugsweise mittels Lichtmikroskopie vorgenommen.

Der Volumenanteil der Effektpigmente kann zwischen 1% bis 50%, insbesondere zwischen 1% bis 30%, bevorzugt zwischen 1% und 10% vom Gesamtvolumen des Pulverlackes betragen. Durch den entsprechenden Anteil an Effektpigmenten kann gewährleistet werden, dass eine entsprechende Effektwirkung im ausgehärteten Pulverlack sichtbar wird. Die Bestimmung des Volumenanteils kann wiederum an einer definierten Probe nach Auslösen des Lackes erfolgen.

Die Effektpigmente können ausgewählt sein aus der Liste umfassend:
- Metalleffektpigmente,
- Perlglanzpigmente oder Interferenzpigmente,
- Leuchtpigmente,
- Edelstahlpigmente,
- Kupferpigmente,
- Goldbronzepigmente,
- Glasflakes,
- Glashohlkugeln,
- Aluminiumpigmente.

Eine aus dem Pulverlack hergestellte Schicht kann eine Natronlaugenbeständigkeit der Stufe 1 nach einer Einwirkzeit von 30 min, der Stufe 1 bis Stufe 2 nach einer Einwirkzeit von 60 min und der Stufe 1 bis Stufe 3 nach einer Einwirkzeit von 90 min und 120 min zeigen. Dabei wird die Natronlaugenbeständigkeit wie folgt gemessen:

Auf die ausgehärtete Pulverlackschicht, wird 24 h nach dem Einbrennen des Lackfilms ein Tropfen einer 10 gew% igen Natronlauge aufgetröpfelt. In Abständen von 30, 60, 90 und 120 min wird die Natronlauge mit einem Weichen, saugfähigen Tuch entfernt und anschliessend die visuelle Veränderung der Oberfläche gem. den Vorgaben und der Vergleichsbilder der GSB-International e.V. bewertet:

Die visuelle Beurteilung erfolgt gemäss den Qualitätsrichtlinien 631 der Gütegemeinschaft für die Stückgutbeschichtung von Bauteilen (GSB International e.V.)Teil VII, Punkt 25, Ausgabe Mai 2013.

Die Effektänderung für Metallics wird nach folgendem Bewertungssystem gemäss ISO 4628 Teil 1 durchgeführt.
- Stufe 1: Kein Unterschied zwischen der getesteten Oberfläche und der Vorlage (nichtgetestete Oberfläche)
- Stufe 2: Kaum sichtbare Farb- und Effektveränderungen
- Stufe 3: Sichtbare Farb- und Effektveränderungen
- Stufe 4: Deutliche sichtbare Farb- und Effektveränderungen
- Stufe 5: Markante Farbveränderungen - vollständiger Effektverlust
Vorgaben:

| | |
|---|---|
| Konzentration der Natronlauge: | 10 Gew % = ca. 2,5 N |
| Prüftemperatur: | 23 °C +/- 2°C |
| Dauer der Belastung: | 30, 60, 90, 120 min |
| Beurteilung: | visuelle Beurteilung gem. den Qualitätsrichtlinien RL-631 der Gütegemeinschaft für die Stückgutbeschichtung von Bauteilen (GSB International e.V.) Teil VII, Punkt 25, Ausgabe Mai 2013 |

Ein weiterer Aspekt der vorliegenden Erfindung ist ein Pulverlack in ausgehärteter Form hergestellt aus Pulverlack wie vorgängig beschreiben. Dabei weist ein solcher Pulverlack dieselben Eigenschaften und Merkmale auf, wie sie bereits für den Pulverlack in partikulärer Form beschreiben sind, insbesondere hinsichtlich Grösse, Grössenverteilung, Bruchkanten, Volumenanteil und Art der Effektpigmente sowie die Natronlaugenbeständigkeit.

Ein weiterer Aspekt der vorliegenden Erfindung betrifft ein Verfahren zur Herstellung von Pulverlack mit Effektpigmenten. Dabei wird mittels eines Extruders eine homogene thermoplastische Lackmasse aus den Ausgangsstoffen, insbesondere umfassend Bindemittel, Additive, Farbmittel und/oder Füllstoffe, hergestellt. Die Lackmasse wird nach dem Verlassen des Extruders vermahlen. Die Effektpigmente werden in einem Endbereich des Extruders zugegeben und in der viskosen Lackmasse dispergiert. Dadurch, dass die Effektpigmente erst in einem Endbereich des Extruders zugegeben werden, werden diese nur noch geringfügig durch die im Extruder herrschenden Scherkräfte beaufschlagt und entsprechend nicht oder nur wenig beschädigt. Dabei wird unter einem Endbereich des Extruders derjenige Bereich verstanden, sich in unmittelbarer Nähe zur Austrittsöffnung des Extruders befindet und eine Effektpigmentzudosierung noch ermöglicht. Der Abstand zwischen Effektpigmentzudosierung und der Düsenaustrittsöffnung kann, gemessen an der Gesamtlänge der Extruderwelle kleiner oder gleich der Hälfte, insbesondere kleiner oder gleich einem Drittel, bevorzugt kleiner oder gleich einem Viertel der Gesamtlänge betragen.

Die Effektpigmente können gravimetrisch oder volumetrisch dosiert zugegeben werden. Durch eine gravimetrische oder volumetrische Zugabe kann gewährleistet werden, dass genau diejenige Menge an Effektpigmenten verarbeitet wird, welche zu der im Extruder verarbeiteten Menge an Ausgangsstoffen benötigt werden.

Die Effektpigmente können unter Schutzgas, insbesondere unter Stickstoff, zugegeben werden. Die Verarbeitung unter Schutzgas reduziert das Explosionsrisiko, so dass ein sicherer, kontinuierlicher Betrieb gewährleistet werden kann.

Eine aus einem erfindungsgemässen Pulverlack hergestellte Pulverlackschicht zeigt unter standardisierten Applikationsbedingungen im direkten Vergleich zu den üblichen veredelten Lacken ("dry-blend"-Pulverlack oder mittel "bonding" hergestellter Pulverlack) eine geringere Separationsneigung zwischen dem Grundpulver und dem Effektpigment. Infolge dessen tritt bei der Pulverapplikation eine deutlich homogenere Abscheidung nahezu ohne Wolken- und Streifenbildung auf. Es versteht sich von selbst, dass bei diesem und den nachfolgenden Vergleichen jeweils identische Effektpigmente und identischen Lackrezepturen verwendet wurden.

Eine solche Pulverlackschicht zeigt unter standardisierten Applikationsbedingungen im direkten Vergleich zu den üblichen veredelten Lacken eine deutliche verbesserte Rückgewinnungsstabilität.

Der erfindungsgemässe Pulverlack zeigt bei der Applikation - auch bei unterschiedlichen Hochspannungen und Triboanwendungen - eine signifikant höhere Farbton- und Effektstabilität im direkten Vergleich zu den üblichen veredelten Lacken.

Der erfindungsgemässe Pulverlack zeigt gegenüber den üblichen veredelten Pulverlacken ein signifikant verbessertes Gesamteffektbild. Im direkten Vergleich von Pulverlackproben aus erfindungsgemässem Pulverlack zu Pulverlacken, welche durch klassischen Einextrusion von Effektpigmenten in die Pulverlackmatrix bei gleicher Gesamtzusammensetzung hergestellt wurden, zeigen die erfindungsgemässen Pulverlacke in den nachfolgend aufgezeigten Bewertungskriterien A1, A2, A3 bei allen Punkten Benotungen von <= 2.

Die Beurteilung des Effektbildes von applizierten und eingebrannten Pulverlacken erfolgt visuell im direkten Vergleich der Proben:
Kriterien für die Beurteilung der Homogenität der Effektverteilung der beschichteten und eingebrannten Pulverlacke:
   A1: Effektverteilung auf der Fläche (Streifen & Wolken)
   A2: Effektanhäufung / -verarmung auf den Kanten
   A3: Separierung auf der Rückseite (bei einseitiger Beschichtung).
Bedeutung der Bewertungsziffern:
   1 - deutlich besser/höher/grösser als die Vergleichsprobe
   2 - besser/höher/grösser als die Vergleichsprobe
   3 - Vergleichbar mit der Vergleichsprobe
   4 - schlechter/niedriger/kleiner als die Vergleichsprobe
   5 - deutlich schlechter/niedriger/kleiner als die Vergleichsprobe

Mit dem vorgängig geschilderten erfindungsgemässen Verfahren zur Herstellung von Pulverlacken werden die Effektpigmente äusserst schonend in die Lackmatrix eingearbeitet und die Pigmentgrösse und Pigmentverteilung nur geringfügig beeinflusst. Die ursprünglichen Pigmentgrössen bleiben im Wesentlichen erhalten. Dieses hat einen positiven Einfluss auf die Glitzerfähigkeit (Sparkelingintensität) und die Körnigkeit (Graininess).

Im Gegensatz hierzu steht die bekannte Einextrusion mit Effektpigmentzugabe bereits zu Begin der Prozessstrecke des Extruders, wo die Pigmentteilchen sehr starken Scherbeanspruchungen ausgesetzt werden und die Effektpigmente dabei zerteilt werden.

Im direkten Vergleich von Proben ausgehend von der gleichen Pigmenttype, derselben Pigmentgrössenverteilung, und einer identischen Lackmatrix zeigen die nach dem erfindungsgemässen Verfahren hergestellten Pulverlacke eine signifikant erhöhte Sparkelingintensität und Graininess.

Die Sparkelingintensität von Proben kann mit Hilfe des Gerätes BYK mac i 23 von der Fa. Altana bestimmt werden. Die Sparklingintensität gibt einen Messwert wieder über die Intensität der Lichtreflexion an den Effektpigmenten in einer Lackschicht. Die Intensitäten der Proben werden dabei unter 3 verschiedenen Betrachungswinkeln vermessen (15°, 45° 75°). Zusätzlich kann die Summer der Sparklingintensitäten berechnet werden.

Die Sparkling Intensität ist dabei abhängig von der Pigmenttype, vom Pigmentanteil (Volumenanteil oder Gewichtsanteil) in der Lackschicht, der Grösse der Pigmentteilchen und der Orientierung der Teilchen.

Je grösser dieser Wert ist, desto stärker ist die Lichtreflexion und umso effektvoller erscheint die Lackschicht.

Die Sparkelingintensität des neuen Pulverlackes / Pulverlackfilms liegt dabei je nach Betrachtungswinkel in Summe signifikant >= 30% insbesondere >= 65% bevorzugt >= 100 % höher im Vergleich zu der klassischen Einextrusion von Effektpigmenten.

Die Graininess (Körnigkeit) von Proben kann dabei mit Hilfe des Gerätes BYK mac i 23 von der Fa. Altana /Byk bestimmt werden. Der Wert der Graininess beschreibt bei diffuser Beleuchtung das Vorhandensein von hell-dunkel Flächen und liefert somit quantitative Aussagen hierzu. Die Graininess wird beeinflusst durch die Pigmentart, die Pigmentgrösse und Grössenverteilung, die Pigmentorientierung und die Pigmentverteilung. Die Werte liegen dabei im Bereich von Graininess G = 0 (keine hell-dunkel Flächen) bis zu G = 15 (maximale Verteilung von hell-dunkel Flächen).

Die Graininess des neuen Pulverlackfilms kann dabei signifikant >= 30%, insbesondere >= 65%, bevorzugt >= 100 %, höher liegen im Vergleich zu der klassischen Einextrusion von Effektpigmenten.

Anhand von Figuren, welche lediglich Ausführungsbeispiele darstellen, wird die Erfindung im Folgenden näher erläutert. Es zeigen:
- Figur 1a:: eine mikroskopische Aufnahme einer Probe aus einem Pulverlack mit Effektpigmenten nach dem Stand der Technik, wobei der Lack ausgelöst wurde,
- Figur 1b:: eine vergrösserte mikroskopische Aufnahme der Probe nach Figur 1a,
- Figur 2a:: eine mikroskopische Aufnahme einer Probe aus einem erfindungsgemässen Pulverlack mit Effektpigmenten, wobei der Lack ausgelöst wurde,
- Figur 2b:: eine vergrösserte mikroskopische Aufnahme der Probe nach Figur 2a,
- Figur 3:: eine Normalverteilung der Grösse der Effektpigmente eines erfindungsgemässen Pulverlackes und eines Pulverlackes nach dem Stand der Technik,
- Figur 4:: eine schematische Darstellung eines Extruders zur Herstellung des erfindungsgemässen Pulverlackes,
- Figur 5a:: eine Probe zur Bestimmung der Graininess und der Sparkelingintensität einer erfindungsgemässen Pulverlackschicht,
- Figur 5b:: eine Probe zur Bestimmung der Graininess und der Sparkelingintensität einer Pulverlackschicht nach dem Stand der Technik,
- Figur 6:: der direkte Vergleich der gemessenen Graininess der Proben gemäss den Figuren 5a und 5b,
- Figur 7:: der direkte Vergleich der gemessenen Sparkelingintensitäten der Proben gemäss den Figuren 5a und 5b,
- Figur 8a:: eine Probe zur Bestimmung der Natronlaugenbeständigkeit einer erfindungsgemässen Pulverlackschicht,
- Figur 8b:: eine Probe zur Bestimmung der Natronlaugenbeständigkeit einer Pulverlackschicht nach dem Stand der Technik,
- Figur 9:: eine Probe zur Bestimmung der Separationsneigung von Effektpigmenten eines Pulverlackes nach dem "dry-blend"-Verfahren,
- Figur 10:: eine Probe zur Bestimmung der Separationsneigung von Effektpigmenten eines Pulverlackes nach dem "bonding"-Verfahren,
- Figur 11:: eine Probe zur Bestimmung der Separationsneigung von Effektpigmenten eines Pulverlackes nach dem erfindungsgemässen Verfahren,
- Figur 12:: eine Probe zur Beurteilung der Wolken- und Streifenbildung im uneingebrannten Zustand eines Pulverlackes nach dem "dry-blend"-Verfahren,
- Figur 13:: eine Probe zur Beurteilung der Wolken- und Streifenbildung im uneingebrannten Zustand eines Pulverlackes nach dem "bonding"-Verfahren,
- Figur 14:: eine Probe zur Beurteilung der Wolken- und Streifenbildung im uneingebrannten Zustand eines Pulverlackes nach dem erfindungsgemässen Verfahren,
- Figur 15a und b:: eine mikroskopische Aufnahme von Pulverlack-Pulver nach dem "dry-blend"-Verfahren in unterschiedlicher Vergrösserung,
- Figur 16a und b:: eine mikroskopische Aufnahme von Pulverlack-Pulver nach dem "bonding"-Verfahren in unterschiedlicher Vergrösserung,
- Figur 17a und b:: eine mikroskopische Aufnahme von Pulverlack-Pulver nach dem erfindungsgemässen Verfahren in unterschiedlicher Vergrösserung,
- Figur 18:: eine Darstellung der Rückgewinnungsstabilität nach unterschiedlichen Zeiten eines Pulverlackes nach dem "dry-blend"-Verfahren,
- Figur 19:: eine Darstellung der Rückgewinnungsstabilität nach unterschiedlichen Zeiten eines Pulverlackes nach dem "bonding"-Verfahren, und
- Figur 20:: eine Darstellung der Rückgewinnungsstabilität nach unterschiedlichen Zeiten eines Pulverlackes nach dem erfindungsgemässen Verfahren.

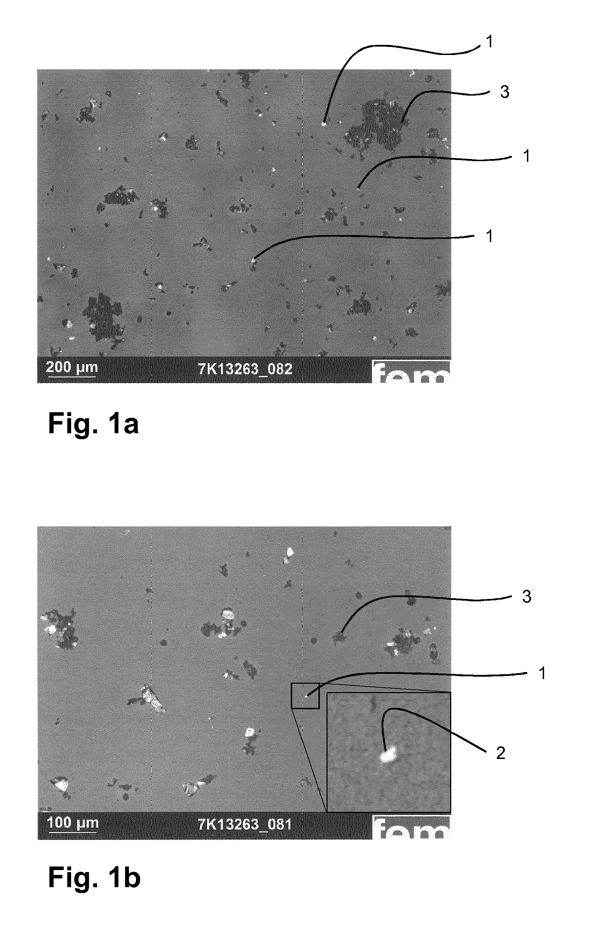

Die Figuren 1a und 1b zeigen eine mikroskopische Aufnahme einer Probe aus einem Pulverlack mit Effektpigmenten 1 nach dem Stand der Technik mit unterschiedlichen Vergrösserungen, wobei der Lack ausgelöst wurde. Die Effektpigmente 1 sind dabei deutlich als glänzende Partikel zu erkennen. Die in der Aufnahme zu erkennenden dunklen Stellen rühren von Farbpigmenten, Füllstoffen oder anderen im Lack enthaltenen nicht ausgelösten Zusatzstoffen 3 her. Auffallend sind die unterschiedliche Form und Grösse der Effektpigmente 1. Diese unterschiedlichen Formen sind durch den im Stand der Technik bekannten Herstellungsprozess bedingt. Wenn beim Vermischen und Dispergieren der für den Pulverlack benötigten Ausgangsstoffe die Effektpigmente ebenfalls gleichzeitig im Extruder beigegeben werden, sind diese beim Durchlaufen durch den Extruder hohen Scherkräften ausgesetzt und werden beschädigt, beispielsweise gebrochen oder verformt. Entsprechend liegen die Effektpigmente 1 nicht mehr in ihrer ursprünglichen, meist scheibenförmig runden Form vor. Ausserdem wird die für die Effektwirkung wirksame Grösse der Effektpigmente reduziert.

In der Figur 1b ist in einem Teilbereich ein einzelnes Effektpigment 1 zusätzlich vergrössert dargestellt. Deutlich zu erkennen ist die Abweichung von der runden Form, ausserdem kann eine Bruchkante 2 erkannt werden. Solche Bruchkanten 2 sind meist als gerade Begrenzungslinien der Effektpigmente zu erkennen.

Die in den Figuren 1a und 1b vorliegenden Effektpigmente 1 weisen noch eine mittlere Grösse von 20 µm auf. Die kleinsten auf den beiden Abbildungen zu erkennenden Effektpigmente sind lediglich 5 µm und die grössten Effektpigmente 35 µm gross.

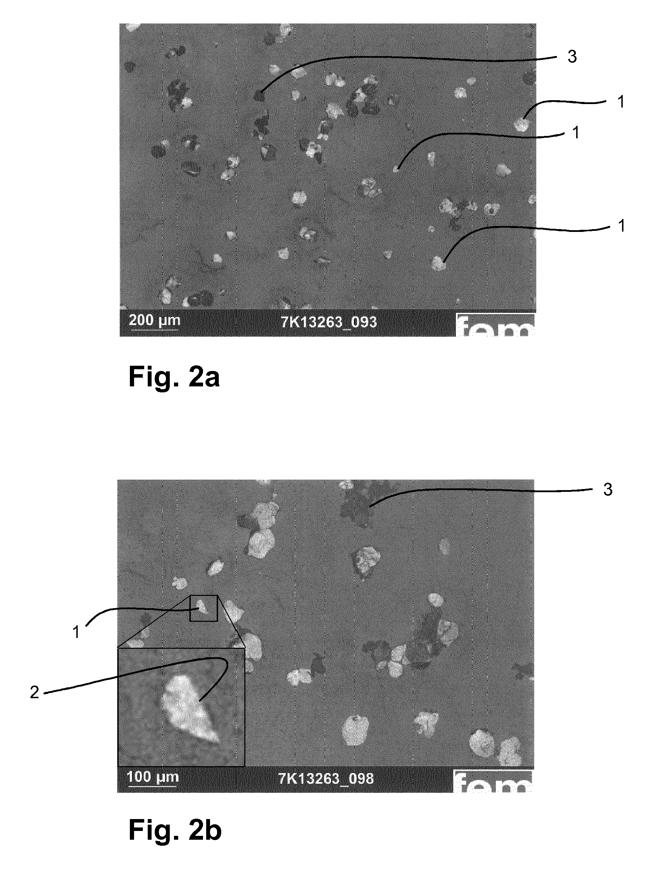

In den Figuren 2a und 2b sind mikroskopische Aufnahmen einer Probe aus einem erfindungsgemässen Pulverlack mit Effektpigmenten 1 in den gleichen Vergrösserungen wie in den Figuren 1a bzw. 1b dargestellt. Die Effektpigmente 1 sind wiederum als glänzende Partikel zwischen nicht ausgelösten im Lack vorhandenen Zusatzstoffen 3 erkennbar. Auffallend ist, dass im Vergleich zu den Figuren 1a und 1b die Effektpigmente 1 grösser und mehrheitlich unbeschädigt zu erkennen sind. Die für die Herstellung des Pulverlackes verwendeten Effektpigmente waren für beide Proben gemäss den Figuren 1 und den Figuren 2 gleich gross. Es zeigt sich jedoch, dass durch ein schonenderes Einbringen der Effektpigmente in den Pulverlack die Effektpigmente nur geringfügige beschädigt wurden und entsprechend grösser sind.

Die in den Figuren 2a und 2b gezeigten Effektpigmente 1 weisen eine mittlere Grösse von 55 µm auf. Die kleinsten auf den beiden Figuren 2a und 2b zu erkennenden Effektpigmente sind 40 µm und die grössten Effektpigmente 70 µm gross.

Wiederum ist in der Figur 2b ein Effektpigmente 1 zusätzlich vergrössert dargestellt, so dass seine Bruchkante 2 erkennbar ist. Auch bei einem schonenden Einarbeiten der Effektpigmente 1 in den Pulverlack kann eine Beschädigung der Effektpigmente nicht ausgeschlossen werden. Diese ist insbesondere durch die für die Herstellung von Pulverlack bedingte Vermahlung des Lackes bedingt.

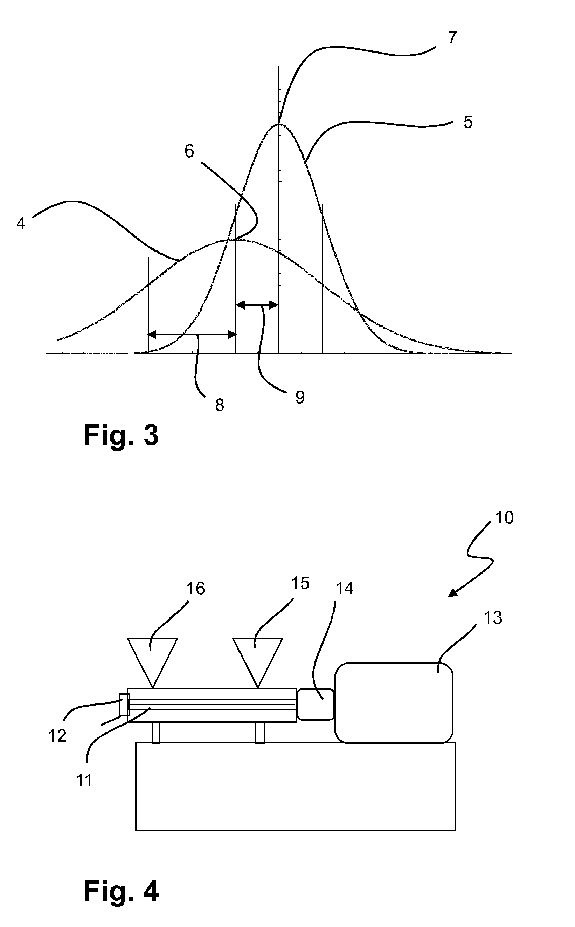

Die Figur 3 zeigt eine Normalverteilung der Grösse der Effektpigmente 1 (siehe Figuren 1 und 2) eines erfindungsgemässen Pulverlackes und eines Pulverlackes nach dem Stand der Technik. Dabei stellt flache Kurve 4 die Grössenverteilung der Effektpigmente des Pulverlackes nach dem Stand der Technik dar, während die spitze Kurve 5 die Grössenverteilung der Effektpigmente des erfindungsgemässen Pulverlackes darstellt. Die mittlere Grösse 6 der flachen Kurve 4 der Effektpigmente des Pulverlackes nach dem Stand der Technik ist deutlich kleiner als die mittlere Grösse 7 der Effektpigmente des erfindungsgemässen Pulverlackes. Ebenso ist die Standardabweichung 8 der Effektpigmente des Pulverlackes nach dem Stand der Technik deutlich grösser als die Standardabweichung 9 der Effektpigmente des erfindungsgemässen Pulverlackes.

In der Figur 4 ist schematisch ein Extruder 10 zur Herstellung des erfindungsgemässen Pulverlackes dargestellt. Der Extruder 10 weist eine Extruderwelle 11 und einen Extruderkopf 12 auf. Die Extruderwelle 11 wird über eine Kupplung 14 von einem Motor 13 angetrieben. Durch die Drehbewegung der Extruderwelle werden die einzelnen Ausgangsstoffe, welche in einem Einfülltrichter 15 an motorseitigen Ende der Extruderwelle 11 in den Extruder 10 eingefüllt werden, zum Extruderkopf 12 transportiert. Gleichzeitig mit dem Transportieren der Ausgangsstoffe werden diese im Extruder 10 untereinander vermischt und homogen dispergiert. Durch die im Extruder 10 auftretenden Scherkräfte wird die Lackmasse aus Ausgangsstoffen erwärmt, wobei auch zusätzliche Wärmequellen denkbar sind. Erfindungsgemäss werden die Effektpigmente erst im letzten Abschnitt der Extruderwelle 11 dem Extruder 10 durch einen Einfülltrichter 16 zugeführt. Die Extruderwelle 11 kann in ihrem Endbereich, als dort wo die Effektpigmente zugeführt werden, speziell ausgestaltet sein, so dass die Effektpigmente schonend in die Lackmasse eingearbeitet werden.

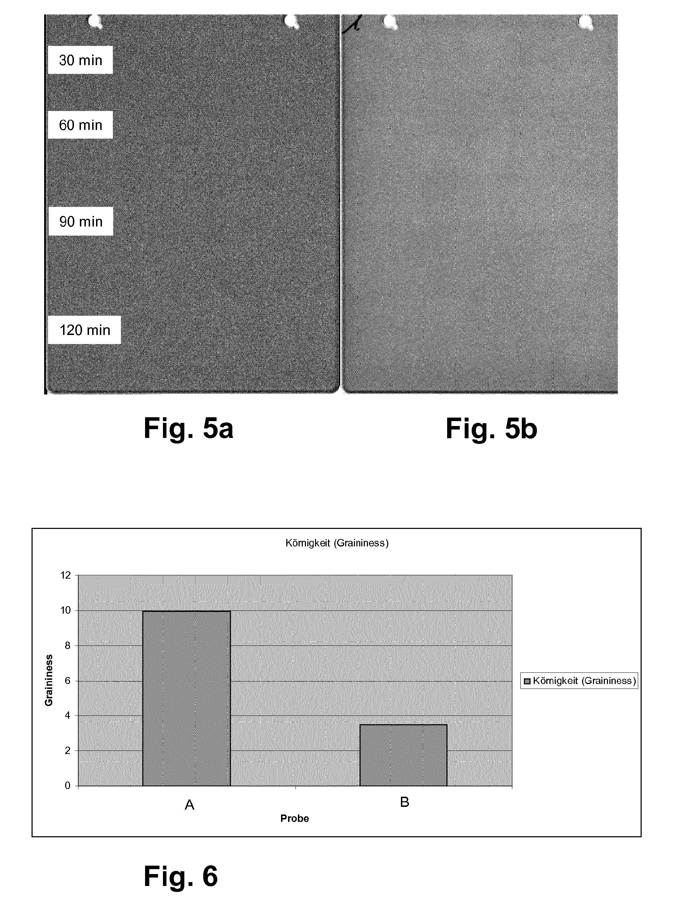

Die Figuren 5a und 5b zeigen je eine Probe zur Bestimmung der Graininess und der Spareklingintensität einer erfindungsgemässen Pulverlackschicht (Figur 5a) und einer Probe einer Pulverlackschicht nach dem Stand der Technik mittels klassischer Einextrusion (Figur 5b). Beide Proben sind mit denselben Effektpigmenten, derselben Grössenverteilung der Effektpigmente und derselben Lackrezeptur hergestellt worden. Deutlich zu erkennen ist die unterschiedliche Körnigkeit.

Figur 6 zeigt nun den direkten Vergleich der gemessenen Graininess der Proben gemäss den Figuren 5a und 5b, wobei dabei das vorgängig beschriebene Messverfahren mit Hilfe des Messgerätes BYK mac i 23 von der Fa. Altana /Byk durchgeführt wurde. Die Werte mit der Bezeichnung A entsprechen dabei denjenigen der Probe mit dem erfindungsgemässen Pulverlack, während die Bezeichnung B Pulverlack nach der klassischen Einextrusion kennzeichnet.

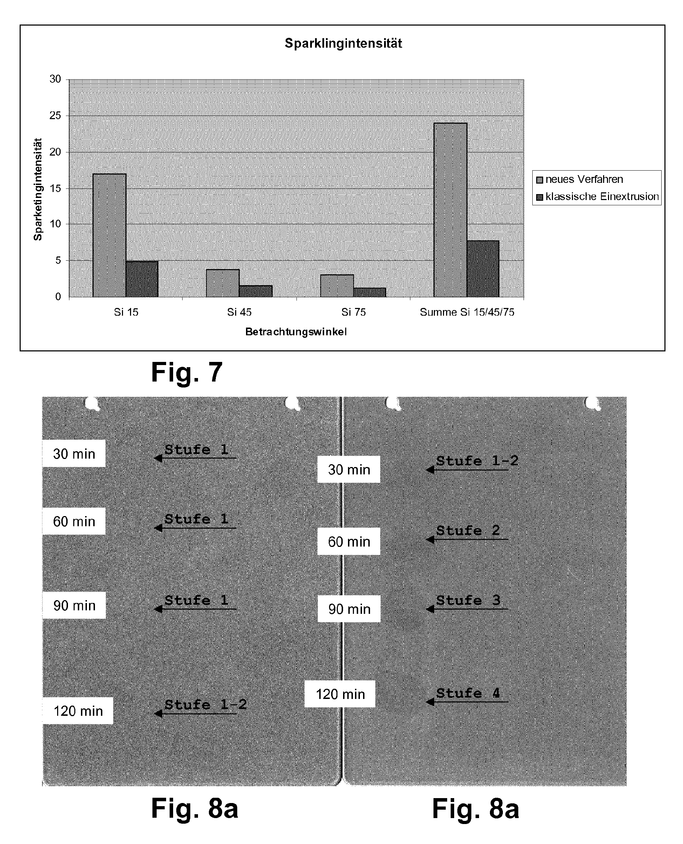

Figur 7 zeigt den direkten Vergleich der gemessenen Sparkelingintensitäten der Proben gemäss den Figuren 5a und 5b. Dabei wurde wiederum mit dem Messgerät BYK mac i 23 von der Fa. Altana /Byk gemessen. Dargestellt sind die Resultate der unterschiedlichen Betrachtungswinkel 10°, 45°, 75° sowie deren Summe.

Figur 8a zeigt eine Probe zur Bestimmung der Natronlaugenbeständigkeit einer erfindungsgemässen Pulverlackschicht, während Figur 8b eine solche Probe mit einer Pulverlackschicht nach dem Stand der Technik (Einextrusion) zeigt. Im direkten Vergleich dieser Proben (gleiche Pigmenttype, Pigmentgrössenverteilung, gleiche Lackmatrix) zeigen die nach dem erfindungsgemässen Verfahren hergestellten Pulverlacke eine signifikant verbesserte chemische Beständigkeit, insbesondere z.B. gegen Natronlauge bei aluminiumhaltigen Pigmenten oder Goldbronzen.

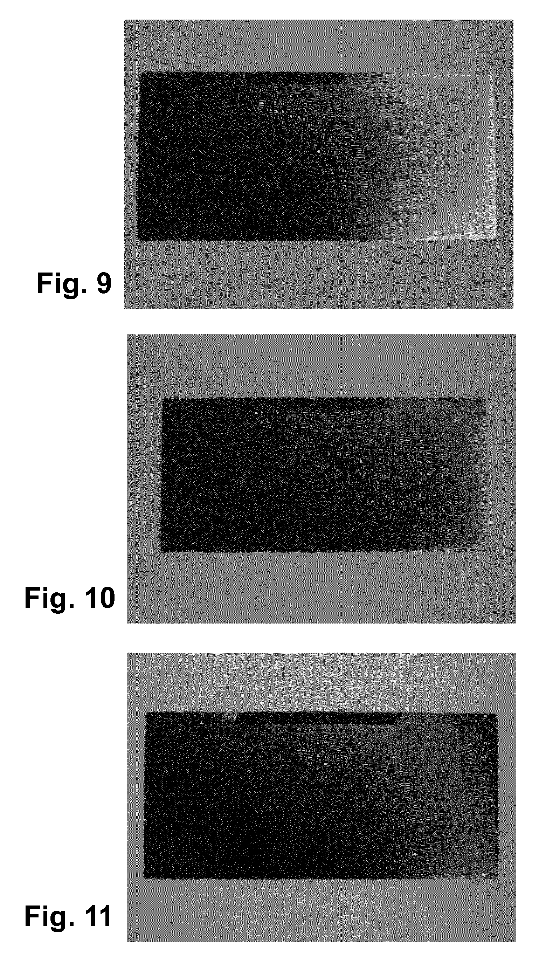

Die Figuren 9, 10 und 11 zeigen je eine Probe zur Bestimmung der Separationsneigung von Effektpigmenten eines Pulverlackes nach dem "dry-blend"-Verfahren (Figur 9), nach dem "bonding"-Verfahren und nach dem erfindungsgemässen Verfahren.

In Figur 9 ist ein guter Umgriff des Pulverlackes auf die Rückseite zu erkennen. Ausserdem zeigt sich eine sehr starke Separierung zwischen Effektmittel und dem Grundpulverlack. Diese Separierung ist besonders stark auf den Kanten, des zuvor schwarzen Bleches, sichtbar. Zudem ist eine überhöhte Menge an losen Effektpigmenten auf der Oberfläche sichtbar, welche durch die nachträgliche Anhaftung von separierten Effektpigmenten entsteht.

Auch in Figur 10 ist ein guter Umgriff des Pulverlackes auf der Rückseite erfolgt. Sichtbar ist eine leichte Separierung zwischen Effektmittel und dem Grundpulverlack. Diese ist auf den Kanten, des zuvor schwarzen Bleches, sichtbar. Eine überhöhte Menge an losen Effektpigmenten hat sich auf der Oberfläche abgeschieden, dies ist jedoch deutlich weniger stark ausgeprägt im Vergleich zu dem Dry-Blend-Pulverlack (siehe Figur 9).

In Figur 11 erfolgte ein guter Umgriff des Pulverlackes auf der Rückseite. Es ist nahezu keine Separierung zwischen Effektmittel und dem Grundpulverlack zu erkennen. Ausserdem ist kein Nachflittern von losen Effektpigmenten erkennbar.

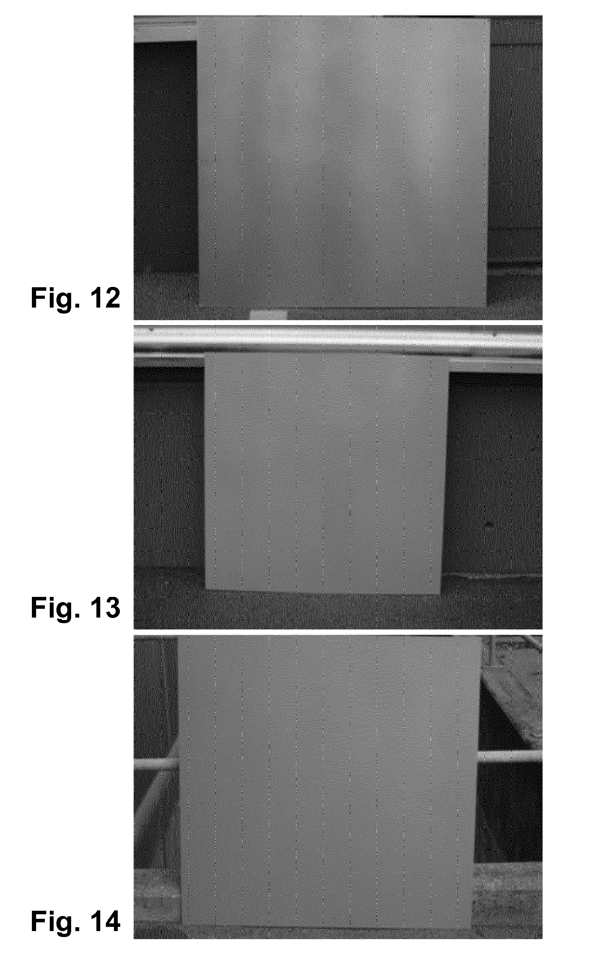

Die Figuren 12, 13 und 14 zeigen je eine Probe zur Beurteilung der Wolken- und Streifenbildung im uneingebrannten Zustand eines Pulverlackes nach dem "dry-blend"-Verfahren (Figur 12), nach dem "bonding"-Verfahren (Figur 13) und nach dem erfindungsgemässen Verfahren (Figur 14). Dabei wird unter standardisierten Bedingungen mit Hilfe der Automatikapplikation der Pulverlack aufgetragen.

In Figur 12 ist durch die Separierung von Effektpigment und dem Grundpulverlack eine starke Wolken- und Streifenbildung entstanden. In Figur 13 ist nur noch eine leichte Wolken- und Streifenbildung zu erkennen. In Figur 14 tritt keine oder nahezu keine Separierung auf. Es sind keine Wolken und keine Streifen erkennbar.

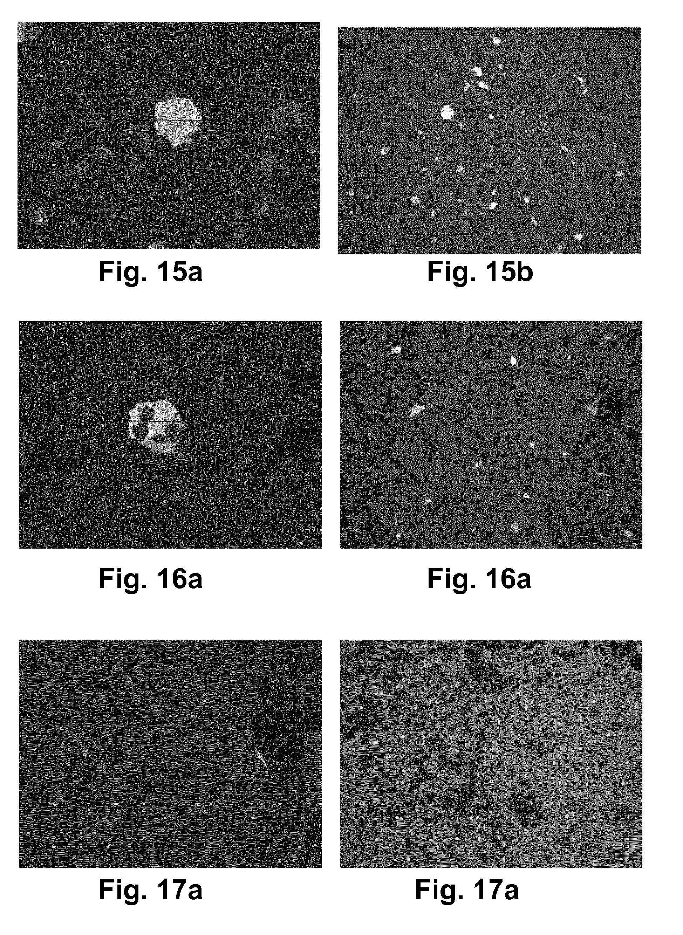

In den Figuren 15a und b sind je eine mikroskopische Aufnahme von Pulverlack-Pulver nach dem "dry-blend"-Verfahren in unterschiedlicher Vergrösserung, 1500x (Figur 15a) und 250x (Figur 15b) dargestellt. Die Effektpigmente liegen lose verteilt - d.h. ohne Anbindung- zwischen den übrigen Pulverlackpartikeln vor.

In den Figuren 16a und b sind je eine mikroskopische Aufnahme von Pulverlack-Pulver nach dem "bonding"-Verfahren in unterschiedlicher Vergrösserung, 1500x (Figur 16a) und 250x (Figur 16b) dargestellt. Die Effektpigmente sind teilweise mit Pulverlackpartikeln beaufschlagt.

In den Figuren 17a und b sind je eine mikroskopische Aufnahme von Pulverlack-Pulver nach dem erfindungsgemässen Verfahren in unterschiedlicher Vergrösserung, 1500x (Figur 17a) und 250x (Figur 17b) dargestellt. Die Effektpigmente sind im Wesentlichen mit der Lackmatrix umhüllt.

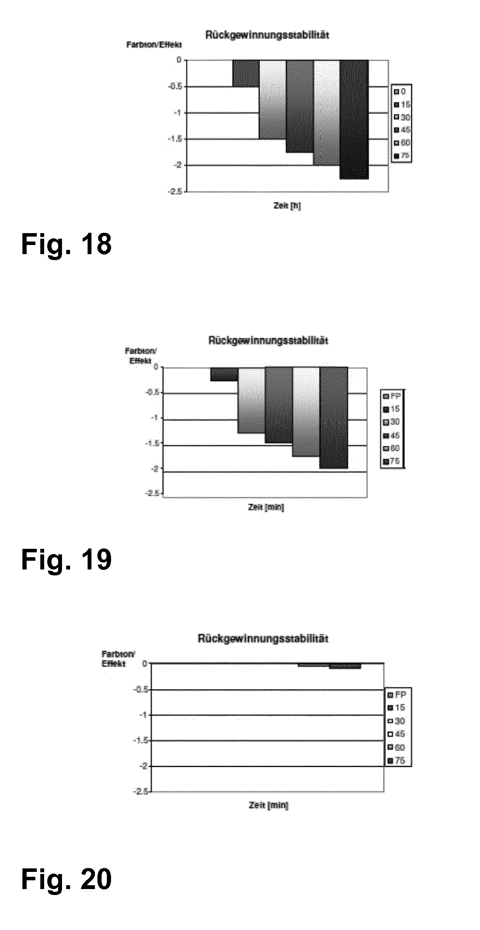

Die Figuren 18, 19 und 20 zeigen eine Darstellung der Rückgewinnungsstabilität nach unterschiedlichen Zeiten eines Pulverlackes nach dem "dry-blend"-Verfahren (Figur 18), nach dem "bonding"-Verfahren (Figur 19) und eines Pulverlackes hergestellt nach dem erfindungsgemässen Verfahren (Figur 20). Der Farbton und die Effektstabilität werden in einem standardisierten Rückgewinnungsversuch bestimmt. "dry-blend"-Pulverlacke zeigen bereits nach einer 15 minütigen Beanspruchung im Pulverlackkreislauf deutliche Farbton und Effektverschiebungen. Nach dem "bonding"-Verfahren hergestellte Pulverlacke zeigen nach einer 30 minütigen Beanspruchung im Pulverlackkreislauf deutliche Farbton und Effektverschiebungen. Sie sind jedoch stabiler in den Rückgewinnungseigenschaften als "dry-blend"-Pulverlacke. Die nach dem erfindungsgemässen Verfahren hergestellten Pulverlacke zeigen eine signifikant höhere Rückgewinnungsstabilität als die beiden andern Pulverlacke. Die Farbton und Effektverschiebungen sind auch nach einer Zeitdauer von 75 Minuten nur minimal zu erkennen.

## Patentansprüche

1. Pulverlack in partikulärer Form mit Effektpigmenten (1),
**dadurch gekennzeichnet, dass** die Effektpigmente (1) wenigstens zu 50%, insbesondere wenigstens zu 75%, bevorzugt wenigstens zu 90% mit einer filmbildenden Lackmatrix benetzt und umhüllt sind.

2. Pulverlack nach Anspruch 1, **dadurch gekennzeichnet, dass** wenigstens 80 %, insbesondere wenigstens 90 %, bevorzugt wenigstens 95 % der Effektpigmente (1) mit der Lackmatrix benetzt sind.

3. Pulverlack nach Anspruch 1 oder 2, **dadurch gekennzeichnet, dass** die Grösse der Effektpigmente (1) einen Mittelwert zwischen 5 µm und 120 µm aufweisen.

4. Pulverlack nach einem der vorhergehenden Ansprüche, **dadurch gekennzeichnet, dass** die Grösse der Effektpigmente (1) einer Normalverteilung mit einem Mittelwert und einer Standardabweichung kleiner oder gleich 50%, insbesondere kleiner oder gleich 30%, bevorzugt kleiner oder gleich 10%, des Mittelwerts entspricht.

5. Pulverlack nach einem der vorhergehenden Ansprüche, **dadurch gekennzeichnet, dass** weniger als 40%, insbesondere weniger las 20%, bevorzugt weniger als 10%, der Effektpigmente (1) eine Bruchkante (2) aufweisen.

6. Pulverlack nach einem der vorhergehenden Ansprüche, **dadurch gekennzeichnet, dass** der Volumenanteil der Effektpigmente (1) zwischen 1% bis 50%, insbesondere zwischen 1% bis 30%, bevorzugt zwischen 1% bis 10% vom Gesamtvolumen des Pulverlackes beträgt.

7. Pulverlack nach einem der vorhergehenden Ansprüche, **dadurch gekennzeichnet, dass** die Effektpigmente ausgewählt sind aus der Liste umfassend:
- Metalleffektpigmente,
- Perlglanzpigmente oder Interferenzpigmente,
- Leuchtpigmente,
- Edelstahlpigmente,
- Kupferpigmente,
- Goldbronzepigmente
- Glasflakes,
- Glashohlkugeln,
- Aluminiumpigmente.

8. Pulverlack nach einem der vorhergehenden Ansprüche, **dadurch gekennzeichnet, dass** eine mit dem Pulverlack hergestellte Schicht eine Natronlaugenbeständigkeit der Stufe 1 nach einer Einwirkzeit von 30 min, der Stufe 1 bis Stufe 2 nach einer Einwirkzeit von 60 min und der Stufe 1 bis Stufe 3 nach einer Einwirkzeit von 90 min und 120 min zeigt.

9. Pulverlack in ausgehärteter Form hergestellt aus Pulverlack gemäss einem der Ansprüche 1 bis 8.

10. Verfahren zur Herstellung von Pulverlack mit Effektpigmenten (1), insbesondere nach einem der Ansprüche 1 bis 8, wobei mittels eines Extruders (10) eine homogene thermoplastische Lackmasse aus den Ausgangsstoffen, insbesondere umfassend Bindemittel, Additive, Farbmittel und/oder Füllstoffe, hergestellt wird und die Lackmasse nach dem Verlassen des Extruders (10) vermahlen wird, **dadurch gekennzeichnet, dass** die Effektpigmente (1) in einem Endbereich des Extruders (10) zugegeben und in der viskosen Lackmasse dispergiert werden.

11. Verfahren nach Anspruch 1, **dadurch gekennzeichnet, dass** die Effektpigmente (1) gravimetrisch oder volumetrisch dosiert zugegeben werden.

12. Verfahren nach Anspruch 10 oder 11, **dadurch gekennzeichnet, dass** die Effektpigmente (1) unter Schutzgas, insbesondere unter Stickstoff, zugegeben werden.
